# EUROPÄISCHE PATENTANMELDUNG

(11) **EP 1 947 476 A2**
(43) Veröffentlichungstag der Anmeldung: **23.07.2008**
(21) Anmeldenummer: 07122277.2
(22) Anmeldetag: 04.12.2007
(51) Int. Cl.: G01S 15/52, G01S 15/93

(54) **Verfahren zur Unterstützung eines Einparkvorgangs eines Fahrzeugs**

(30) Priorität: 18.01.2007 DE 102007002738
(71) Anmelder: ROBERT BOSCH GMBH, 70442 Stuttgart (DE)
(72) Erfinder: Schoenherr, Michael, 70190 Stuttgart (DE); Preissler, Peter, 36460 Dorndorf (DE)

(57) **Zusammenfassung**

Die Erfindung betrifft ein Verfahren zur Unterstützung eines Einparkvorgangs eines mindestens einen Sensor (11), insbesondere Ultraschallsensor, aufweisenden Fahrzeugs (2) in eine seitlich zum Fahrzeug (2) angeordnete Parklücke (1), wobei mittels der Sensoren (11) die Parklücke (1) und ein Abstand zu einem Objekt (13), insbesondere einem Hindernis im Umfeld des Fahrzeugs (2), während eines Vorbeifahrens erfasst werden. Mit der Erfindung ist ein verbessertes Verfahren zur Unterstützung eines Einparkvorgangs eines Fahrzeugs (2) geschaffen, bei dem die in dem Umfeld des Fahrzeugs (2) befindlichen Objekte (13) hinsichtlich ihres Bewegungszustands unterschieden werden. Das hat den Vorteil, dass beispielsweise der fließende Verkehr ausgeblendet werden kann.

## Beschreibung

### Stand der Technik

Die Erfindung betrifft ein Verfahren zur Unterstützung eines Einparkvorgangs eines mindestens einen Sensor, insbesondere Ultraschallsensor, aufweisenden Fahrzeugs in eine seitlich zum Fahrzeug angeordnete Parklücke, wobei mittels der Sensoren die Parklücke und ein Abstand zu einem Objekt, insbesondere einem Hindernis im Umfeld des Fahrzeugs, während eines Vorbeifahrens erfasst werden.

Es ist bekannt, Ultraschallsensoren zur Abstandsmessung in Fahrzeugen einzusetzen. Bevorzugt sind die Ultraschallsensoren dabei als Sende- und Empfangseinheiten für Ultraschall ausgeführt. Ein Ultraschallsignal wird von der Sende- und Empfangseinheit ausgesendet und von einem Objekt in der Umgebung des Fahrzeugs reflektiert. Das reflektierte Signal wird von der Sende- und Empfangseinheit wieder aufgenommen. Aus der Laufzeit und der Schallgeschwindigkeit wird ein Abstand des Objekts zu dem Ultraschallsensor bestimmt. Bevorzugt wird unter Ausnutzung dieses gemessenen Abstands eine Warneinrichtung betrieben, die einen Fahrer eines Fahrzeugs davor warnt, zu nahe an ein Objekt heran zu steuern, welches für das Fahrzeug zum Hindernis werden kann.

Es sind unterschiedliche Verfahren und Vorrichtungen eines Ultraschallsensors bekannt. Die prinzipielle Arbeitsweise kann wie folgt beschrieben werden: Um die Ultraschallsignale aufnehmen zu können, weist die Ultraschallsende- und Empfangseinheit eine schwingfähige Membran auf, an der ein Piezoelement angeordnet ist. Das Piezoelement dient in einer ersten Betriebsart dazu, die Membran zur Schwingung und damit zur Aussendung von Ultraschallsignalen anzuregen. Ferner werden auch von der Membran aufgenommene Schwingungen an das Piezoelement übertragen, so dass die Schwingungen dazu führen, dass an dem Piezoelement eine den Schwingungen entsprechende Spannung abgegriffen, verstärkt und ausgewertet werden kann, um die Laufzeit des reflektierten Signals zu bestimmen und hieraus den Abstandswert zu erhalten.

Auch in DE 199 01 953 A1 wird eine Vorrichtung zur Bestimmung eines Abstands eines Fahrzeugs zu einem Objekt beschrieben. Dabei ist die Vorrichtung dadurch gekennzeichnet, dass die Sensoren zur Abstandsmessung als Ultraschallsensoren ausgebildet sind.

Der in DE 10 2004 062 022 A1 beschriebene Sensor erfasst Objekte im Umfeld des Fahrzeugs, indem die Laufzeit, der von den Objekten reflektierten Signale ausgewertet wird.

Die Vermessung von Objekten, insbesondere einer Parklücke, ist in DE 10 2004 053 158 A1 beschrieben. Zur Unterstützung des Einparkvorgangs eines Fahrzeugs sind an diesem Sensoren zur Messung eines Abstands angeordnet. Eine im Fahrzeug angeordnete Elektronikeinheit ist dazu ausgelegt, die mittels der Sensoren bei einem Einparkvorgang gemessenen Abstandsdaten laufend zu speichern. Die so gewonnenen Daten ermöglichen Rückschlüsse auf die Kontur der in der Umgebung des Fahrzeugs befindlichen Objekte.

Aus DE 103 39 645 A1 ist ein Verfahren und eine Vorrichtung zur Bestimmung von Größe und Position einer Parklücke in Relation zur Position eines Fahrzeugs während der Vorbeifahrt des Fahrzeugs an der Parklücke bekannt, wobei die Parklücke eine Ausdehnung längs zur Fahrbahn und eine Ausdehnung quer zur Fahrbahn aufweist. Die Aufgabe der Erfindung in DE 103 39 645 A1 ist es, ein ultraschallbasiertes System zur Parklückenvermessung anzugeben, welches auch bei hoher Vorbeifahrgeschwindigkeit (bis zu 30 km/h) und hoher Parklückenerfassungstiefe (bis zu 5 m) genauer als die bekannten ultraschallbasierten Parklückenvermessungssysteme arbeitet.

Bei einem System zur Nutzung freier Parklücken, wie es aus DE 10 2004 062 021 A1 bekannt ist, ermitteln Sensoren an den Fahrzeugen der Verkehrsteilnehmer die Lage und Abmessungen freier Parklücken während ihrer Vorbeifahrt. Die so gesammelten Daten werden zu einer Zentrale übertragen. Parkplatzsuchenden Verkehrsteilnehmern werden nach Registrierung bei der Zentrale diese Daten nach Aufprägen eines Zeitstempels zur Verfügung gestellt. Im Erfolgsfall werden diesem Verkehrsteilnehmer Gebühren in Rechnung gestellt.

Das in DE 198 47 013 A1 beschriebene Hilfesystem für einen Einparkvorgang eines Fahrzeugs umfasst eine Messeinrichtung zum Messen des momentanen Abstands des Fahrzeugs von einem Objekt, eine Auswerteeinheit, die ein von der Messeinrichtung ausgegebenes Signal des Abstands mit einem Grenzwert vergleicht und einen Warnsignalgeber, der ein für den Fahrer des Fahrzeugs wahrnehmbares Warnsignal erzeugt. Dabei sind die Abstandssensoren der Messeinrichtung in einem hinteren Stoßfänger des Fahrzeugs angeordnet.

Ein weiteres Verfahren ist die aus DE 10 2005 015 354 A1 bekannte Parklückenvermessung (PLV). Dabei wird der Fahrer eines Fahrzeugs im Finden einer ausreichend großen Parklücke unterstützt. Diese Parklückenvermessung kann mit einer Einrichtung zum semiautonomen Einparken zusammenarbeiten, bei der der Fahrer Fahr- und Bremspedal des Fahrzeugs bedienen muss, wohingegen ein Lenken des Fahrzeugs entweder durch den Fahrer oder automatisch ausgeführt werden kann. Eine solche Einrichtung, die das Fahrzeug in eine ausgewählte Parklücke führt, ist unter der Bezeichnung semiautonomer Einparkassistent (SPA, semi-autonomous parking assistant) bekannt.

Ein System zur Unterstützung eines semiautonomen Parkvorgangs bei einem Fahrzeug wird in DE 10 2005 005 969 A1 genauer beschrieben. Dabei umfasst das System mindestens eine an dem Fahrzeug angeordnete Messeinrichtung zur Erfassung der Größe einer Parklücke und der Position des Fahrzeugs relativ zur Parklücke, sowie eine Auswerteeinheit, zur Ermittlung eines geeigneten Parkvorgangswegs in Abhängigkeit der erfassten Daten. Hierbei wird ein Verfahren zur Vermessung einer Parklücke eingesetzt, welches beim Finden einer ausreichend großen Parklücke helfen soll und welches vorzugsweise mit Ultraschallsensoren zur Messung eines Abstands arbeitet.

Aus der Schrift DE 103 32 961 A1 ist ein Verfahren und eine Vorrichtung zur Bestimmung der Position und/oder der zu erwartenden Position eines Fahrzeugs während eines Einparkvorgangs in Relation zur Gegenfahrspur einer mehrspurigen Fahrbahn bekannt. Dabei ermöglicht das Verfahren und die Vorrichtung der DE 103 32 961 A1 ein rechtzeitiges Erkennen des Eintauchens eines Fahrzeugs während eines Einparkvorgangs in die Gegenfahrspur einer mehrspurigen Fahrbahn und aktiviert im Bedarfsfalle geeignete Mittel zur Verhinderung des Eintauchens in die Gegenfahrspur, indem eine Warnung des Führers des Fahrzeugs oder ein rechtzeitiges Abbremsen des Fahrzeugs durchgeführt wird.

Darüber hinaus ist aus DE 10 2005 015 354 A1 bekannt, dass auch das Vermessen und Überwachen der Gegenspur und/oder der Fahrzeugseite, die der Parklücke gegenüberliegt, von Vorteil ist. Objekte, die sich auf der Gegenfahrbahn befinden, wie entgegenkommende Fahrzeuge oder abgestellte Fahrzeuge, bilden ein potentielles Hindernis bei einem Einparkvorgang. In DE 10 2005 015 354 A1 wird der Abstand zu Hindernissen an beiden Seiten des Fahrzeugs während des Vorbeifahrens an der Parklücke und/oder während des Einfahrens in die Parklücke gemessen. Dadurch ist eine Bestimmung von Objektpositionen auf beiden Seiten möglich.

Aus dem Stand der Technik ist es bekannt, Fahrzeuge mit Systemen zu Überwachung des Tote-Winkel-Bereiches auszustatten. In einer Ausprägung basieren diese Systeme zumeist auf mindestens einem Ultraschallsensor, welcher den Außenraum an der Seite des Fahrzeugs im Bereich des toten Winkels überwacht. Mit derartigen Systemen soll der Fahrzeugbenutzer gewarnt werden, falls sich ein Objekt, insbesondere ein anderes Fahrzeug, im Tote-Winkel-Bereich befindet. Erfindungsgemäß ist für die Überwachung des Tote-Winkel-Bereiches eine Messung der Relativgeschwindigkeit zwischen Fahrzeug und Objekt notwendig. Aus der DE 103 36 964 A1 ist zu entnehmen, dass der Luftdruck und/oder ein Schallsignal an mindestens einem Punkt des Fahrzeugs über ein vorgegebenes Zeitintervall oder vorgegebene Zeitintervalle detektiert wird und die Position des Objekts oder der Objekte relativ zum Fahrzeug durch Auswertung des Signalverlaufs oder der Signalverläufe des Luftdrucks und/oder des Schallsignals bestimmt wird. So kann insbesondere bei hohen Fahrgeschwindigkeiten größer als 30 km/h eine sichere und kostengünstige Detektion von im toten Winkel befindlichen Objekten realisiert werden. Besonders vorteilhaft hieran ist es, dass Ultraschallsensoren für die Detektion der Objekte im toten Winkel des Fahrzeugs verwendet werden können. Vorzugsweise ist es vorgesehen, dass bereits vorhandene Sensoren, wie sie beispielsweise in einem Fahrzeug, welches über eine Einparkhilfe oder eine Parklückenvermessung verfügt, genutzt werden können. Die vorhandenen Systeme besitzen den Nachteil, dass lediglich der Aufenthalt eines Objekts im Tote-Winkel-Bereich detektiert werden kann. Die Geschwindigkeit und die Bewegungsrichtung dieser Objekte können allerdings bei diesen Verfahren nicht bestimmt werden. Somit ist eine Unterscheidung zwischen stehenden und bewegten Objekten nicht möglich. Die DE 101 25 426 A1 beschreibt hingegen ein verbessertes Verfahren, das die Erkennung der Bewegungsrichtung der Objekte relativ zum eigenen Fahrzeug ermöglicht.

Demgegenüber liegt der Erfindung die Aufgabe zu Grunde, ein verbessertes Verfahren zur Unterstützung eines Einparkvorgangs eines Fahrzeugs zu schaffen.

Die der Erfindung zu Grunde liegende Aufgabe wird jeweils mit den Merkmalen der unabhängigen Patentansprüche gelöst. Bevorzugte Ausführungsformen sind in den abhängigen Patentansprüchen angegeben.

### Offenbarung der Erfindung

### Vorteile der Erfindung

Das erfindungsgemäße Verfahren zur Unterstützung eines Einparkvorgangs eines mindestens einen Ultraschallsensor aufweisenden Fahrzeugs in eine seitlich zum Fahrzeug angeordnete Parklücke, wobei mittels der Ultraschallsensoren die Parklücke und ein Abstand zu einem Objekt, insbesondere einem Hindernis im Umfeld des Fahrzeugs, während eines Vorbeifahrens erfasst werden, bei dem die in dem Umfeld des Fahrzeugs befindlichen Objekte hinsichtlich ihres Bewegungszustands unterschieden werden, hat den Vorteil, dass beispielsweise der fließende Verkehr ausgeblendet werden kann und somit das Fahrerassistenzsystem keine falschen Rückschlüsse auf den für den Einparkvorgang zur Verfügung stehenden Raum schließen kann. So braucht der Fahrer beim Einparken nur noch den fließenden Verkehr zu überwachen. Dies steigert dessen Konzentrationsvermögen und senkt so das Kollisionsrisiko. Außerdem werden Parklücken nicht von dem Einparksystem verworfen, weil die zur Verfügung stehende Straßenbereite vermeintlich als zu gering angenommen wird.

Durch die in den abhängigen Ansprüchen aufgeführten Maßnahmen sind vorteilhafte Weiterbildungen und Verbesserungen der im unabhängigen Anspruch angegebenen Erfindung möglich.

Besonders vorteilhaft ist, dass der Bewegungszustand von Objekten auf einer Gegenseite des Fahrzeugs zur Parklücke erfasst wird und dabei zwischen bewegten und stehenden Objekten unterschieden wird. Hierdurch ist es möglich, nur die für den Einparkvorgang relevanten Objekte, wie ein auf der Gegenseite parkendes Fahrzeug, zu berücksichtigen.

Für die Unterstützung des Einparkvorgangs ist es günstig, dass mittels einer Steuereinheit zur Unterstützung des Einparkvorgangs ausschließlich erfasste Positionsdaten unbeweglicher Objekte berücksichtigt werden. Hierdurch ist es möglich, die für den Einparkvorgang nicht relevanten Objekte, insbesondere bewegte Objekte, auszuschließen.

Ein besonderer Vorteil ist, dass zur Parklückenvermessung und/oder der Überwachung des Umfeldes des Fahrzeugs die Ultraschallsensoren einer Tote-Winkel-Detektion genutzt werden. Hierdurch werden für die Parklückenvermessung keine zusätzlichen Sensoren benötigt und das Gesamtsystem lässt sich kostengünstiger realisieren.

Zur Sensierung können neben Ultraschall auch andere Technologien wie beispielsweise Radar, Lidar oder die Verarbeitung von Videobildern eingesetzt werden, dabei können die Tote-Winkel-Detektion und die Parklückenvermessung auf unterschiedlichen Technologien basieren. Ein Vorteil der Erfindung ist es, dass die von der Tote-Winkel-Detektion und der Parklückenvermessung erfassten Positionsdaten der Objekte in der Umgebung des Fahrzeugs in einem identischen Koordinatensystem verarbeitet werden. Hierdurch sind Zuordnungen einzelner Objekte in den beiden Systemen, der Parklückenvermessung und der Tote-Winkel-Detektion, schneller und genauer möglich.

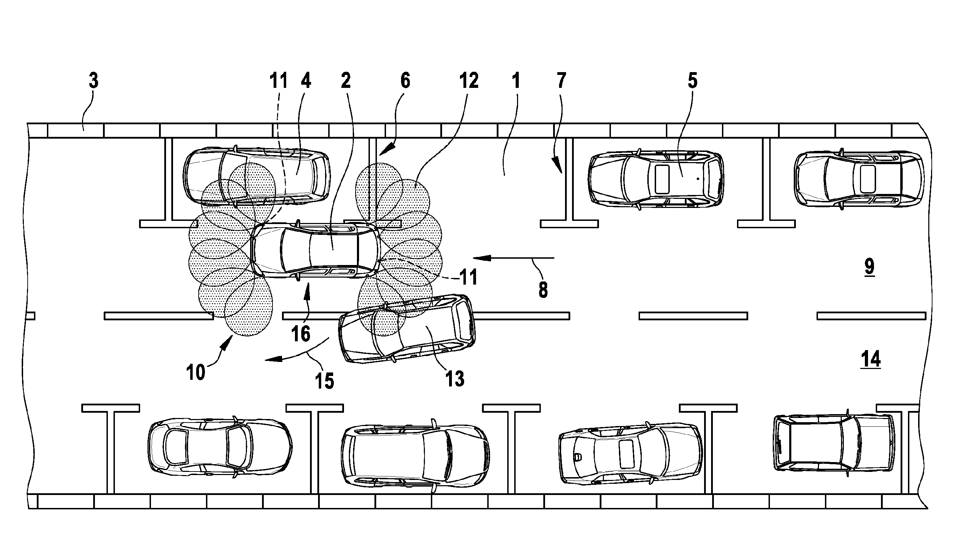

### Kurze Beschreibung der Zeichnung

Ein Ausführungsbeispiel der Erfindung ist in der Zeichnung dargestellt und in der nachfolgenden Beschreibung näher erläutert. Die Zeichnung zeigt eine schematische Darstellung einer Einparksituation mit einem an einer Parklücke vorbeifahrenden Fahrzeug.

### Ausführungsformen der Erfindung

Die Zeichnung zeigt ein in eine seitliche Parklücke 1 einzuparkendes Fahrzeug 2. Die Parklücke 1 befindet sich an einem Fahrbahnrand 3 zwischen zwei bereits geparkten Fahrzeugen 4, 5. Von den geparkten Fahrzeugen 4, 5 begrenzt ein erstes Fahrzeug 4 die Parklücke 1 an deren vorderen Ende 6, und ein zweites Fahrzeug 5 begrenzt die Parklücke 1 an deren hinteren Ende 7.

Das einzuparkende Fahrzeug 2, das vorwärts in einer durch einen Pfeil 8 gekennzeichneten Richtung auf einer Fahrspur 9 an der Parklücke 1 mit geringer Geschwindigkeit vorbei fährt, weist eine Sensoranordnung 10 auf. Die Sensoranordnung 10 umfasst mehrere Sensoren 11 im Frontbereich und/oder im Heckbereich des Fahrzeugs 2. Ausgehend von den Sensoren 11 wird jeweils ein überwachter Raum 12 erfasst.

Bei dem Vorbeifahren des einzuparkenden Fahrzeugs 2 an der Parklücke 1 wird die Parklücke 1 mittels der Sensoranordnung 10 in ihrer Länge und Tiefe erfasst. Gleichzeitig wird während des Vorbeifahrens des Fahrzeugs 2 an der Parklücke 1 mittels der Sensoranordnung 10 ein Abstand zu einem Objekt 13 hinter und neben dem Fahrzeug 2 gemessen. In der hier gezeigten Darstellung handelt es sich bei dem Objekt 13 um ein Fahrzeug, welches das einzuparkende Fahrzeug 2 an einer Gegenseite 16 zur Parklücke 1 überholt und dabei in die neben der Fahrspur 9 angeordnete Gegenfahrspur 14 einfährt. Die Sensoranordnung 10 des einzuparkenden Fahrzeugs 2 ist geeignet, eine Parklücke zu vermessen und das Objekt 13 in einem toten Winkel des Fahrzeugs 2 zu erfassen. Das Objekt 13 wird von der Sensoranordnung 10 erfasst, wobei die Tote-Winkel-Detektion einen Bewegungszustand des Objekts 13 erkennt, der durch einen Pfeil 15 dargestellt ist. Eine Bewegung von Objekten in der Umgebung des Fahrzeugs 2 kann beispielsweise durch zeitlich aufeinanderfolgende Messungen des Abstands zu den Objekten erfolgen. Ändert sich der Abstand bei stehendem Fahrzeug 2 mit der Zeit, so ist von einem bewegten Objekt auszugehen. Ist der Abstand über der Zeit konstant, wird das Objekt als stehend angenommen. Ist das Fahrzeug 2 selbst in Bewegung, ist der Bewegungsvektor des Fahrzeugs 2 bei einer Ermittlung einer Positionsänderung des Objekts entsprechend mit zu berücksichtigen. Der Bewegungszustand des Objekts 13 auf der Gegenfahrspur 14 ist nicht ruhend, daher ist das Objekt 13 für den Einparkvorgang kein relevantes Hindernis. Das Objekt 13, insbesondere seine relative Position zum Fahrzeug 2 und zur Parklücke 1, wird, da es kein relevantes Hindernis ist, von einer Steuereinheit, welche die Unterstützung des Einparkvorgangs regelt, ignoriert, so dass der Fahrer des Fahrzeugs 2 nur den bewegten Verkehr überwachen muss.

## Patentansprüche

1. Verfahren zur Unterstützung eines Einparkvorgangs eines mindestens einen Sensor (11), insbesondere Ultraschallsensor, aufweisenden Fahrzeugs (2) in eine seitlich zum Fahrzeug (2) angeordnete Parklücke (1), wobei mittels der Sensoren (11) die Parklücke (1) und ein Abstand zu einem Objekt (13), insbesondere einem Hindernis im Umfeld des Fahrzeugs (2), während eines Vorbeifahrens erfasst werden, **dadurch gekennzeichnet, dass** die in dem Umfeld des Fahrzeugs (2) befindlichen Objekte (13) hinsichtlich ihres Bewegungszustands unterschieden werden.

2. Verfahren zur Unterstützung eines Einparkvorgangs nach Anspruch 1, **dadurch gekennzeichnet, dass** der Bewegungszustand von Objekten (13) auf einer Gegenseite (16) des Fahrzeugs (2) zur Parklücke (1) erfasst wird und dabei zwischen bewegten und stehenden Objekten (13) unterschieden wird.

3. Verfahren zur Unterstützung eines Einparkvorgangs nach Anspruch 2, **dadurch gekennzeichnet, dass** mittels einer Steuereinheit zur Unterstützung des Einparkvorgangs ausschließlich erfasste Positionsdaten stehender Objekte (13) berücksichtigt werden.

4. Verfahren zur Unterstützung eines Einparkvorgangs nach Anspruch 1, **dadurch gekennzeichnet, dass** zur Parklückenvermessung und/oder der Überwachung des Umfeldes des Fahrzeugs (2) die Sensoren (11) einer Tote-Winkel-Detektion genutzt werden.

5. Verfahren zur Unterstützung eines Einparkvorgangs nach Anspruch 4, **dadurch gekennzeichnet, dass** die von der Tote-Winkel-Detektion und der Parklückenvermessung erfassten Positionsdaten der Objekte (13) in der Umgebung des Fahrzeugs (2) in einem identischen Koordinatensystem verarbeitet werden.
